# EUROPEAN PATENT SPECIFICATION

(11) **EP 2 734 338 B1**
(45) Date of publication and mention of the grant of the patent: **20.01.2016**
(21) Application number: 12713243.9
(22) Date of filing: 23.03.2012
(51) Int. Cl.: B25C 5/06, B25C 5/15, B27F 7/00, B25C 1/06, B25C 5/16

(54) **CABLE CLIP GUN**
KABELSCHELLENPISTOLE
PISTOLET À SERRE-CÂBLE

(30) Priority: 20.07.2011 GB 201112509
(43) Date of publication of application: 28.05.2014
(73) Proprietor: Howe Renovation (Yorks) Limited, Barton Upon Humber DN18 6BA (GB)
(72) Inventor: HOWE, Anthony Richard, Barton Upon Humber DN18 6BA (GB)
(74) Representative: Corbyn, David Jonathan
(86) International application number: PCT/GB2012/000264
(87) International publication number: WO 2013/011252

(56) References cited:
- EP-A2- 0 204 301
- WO-A1-83/03721
- DE-A1- 2 737 180
- DE-U1- 9 013 982
- GB-A- 1 554 602
- GB-A- 2 171 351
- US-A- 2 915 754
- US-A- 4 552 296
- US-A- 5 261 588
- US-A- 5 350 267
- US-A- 5 735 444
- US-A1- 2005 082 334
- US-A1- 2005 167 465

## Description

The present invention relates to a cable clip gun according to the preamble of claim 1 such a cable clip gun is generally known by EP 0 204 301 B1.

It is often desirable to lay a cable along a wall, along a skirting board or around a door frame.

Such a cable might be a television aerial cable, telephone cable, mains electric cable, or loudspeaker cable. One method of doing this is by the use of cable clips which need to be nailed into place individually by the by a person who would obtain each clip from a container or box. It is time consuming task hammering each clip one by one into a surface and measuring the distance between each clip. It is also easy for a person to damage their fingers and the cable itself by this hammering operation.

According to the present invention there is provided a cable clip gun according to claim 1 for securing clips with a pin over a cable into a surface comprising:
a) a gun body,
b) storage means to store a plurality of clips,
c) a cable guide to guide cable through to a driver station,
d) delivery means to deliver a clip from the storage means over the cable at the driver station, and
e) a driver to drive the clip pin into the surface to secure the cable to the surface.

The driver comprises a hammer.

Preferably the clips are in the form of an array of clips joined together by frangible bridging means. Preferably the driver means severs a clip being secured to a cable from the array of clips.

Preferably the driver means is adjustable to drive a clip pin at variable forces.

Preferably the driver means is electrically operated.

Preferably the gun further comprises a metering means to secure a clip over the wire at predetermined intervals.

Preferably the gun is adapted to accommodate different sizes of cable and clips.

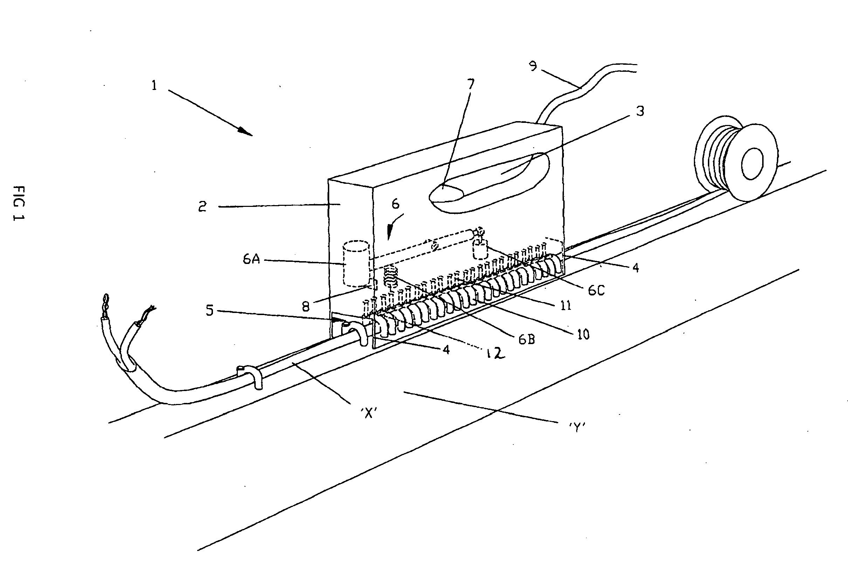

An embodiment of the invention will now be described with reference to the accompanying drawing showing a perspective view.

Referring to the drawing there is shown a cable gun 1 for securing clips 10 with a pin 11 over a cable X into a surface such as a skirting board Y.

Gun 1 has a gun body 2 with a handle 3 to hold the gun onto the cable X and skirting board Y.

An elongate channel 4 provides a storage means to store a plurality of clips 10 with pins 11. Clips 10 may be formed as an array of clips in a strip joined together by frangible bridging means 12.

Elongate channel 4 acts also as a cable guide to guide cable through a driver station 5. Elongate channel 4 also acts as a delivery means to deliver a clip from the storage means over the cable at the driver station 5.

A driver 6 is provided to drive the clip pin 11 at the driver station 5 into the surface Y to secure the cable X to the surface Y. Driver 6 is a hammer with a head 6A biased by a spring 6B towards a pin 11, and head 6A can be pivoted away from pin 11 by an electrical solenoid 6C. Driver 6 can be operated by a trigger 7. Operation of trigger 7 causes solenoid 6 to pivot head 6A away from pin 11 so stretching spring 6B and then turns solenoid 6C "off' whereby the spring 6B drives hammer head 6A onto the pin 11 so driving the pin into the surface Y. Hammer head 6A includes a cutter 8 which cuts through the frangible bridging means so severing the clip at the driver station 5 from the array of clips in channel 4. Power for solenoid 6C is provided from the mains through wire 9.

In use the gun is used to guide the cable X along a surface such as skirting board Y, and the trigger 7 used to secure a clip 10 over the cable as required.

If desired the driver means may be adjustable, e.g. by altering the tension of spring 6B when stretched by the solenoid 6C, to drive a clip pin at variable forces. Thus a different force could be used to drive a pin 11 depending on the nature of the surface it is being driven into (e.g. brick, wood, plastic or plaster).

Furthermore the gun may further comprise a metering means to secure a clip over the wire at predetermined intervals automatically. A control knob (not shown) may be provided to adjust the predetermined interval.

Also the gun may be adapted to accommodate different sizes of cable and clips.

The invention may take a form different to that specifically described above.

Further modifications will be apparent to those skilled in the art without departing from the scope of the present invention as defined by the claims.

## Claims

1. A cable clip (1) gun for securing clip (10) with a pin (11) over a cable (x) into a surface (y) comprising:
a) a gun body (2),
b) storage means to store a plurality of clips (10),
c) a cable guide to guide the cable through to a driver station (5),
d) delivery means to deliver a clip (10) from the storage means over the cable at the driver station (5),
e) an elongate channel (4), which elongate channel (4) is configured to be the storage means for storing a plurality of clip (10), incorporates means to guide the cable and acts as the delivery means to deliver a clip (10) from the storage means and over the cable at the driver station (5) and
f) a driver (6) to drive the clip pin (11) into the surface to secure the cable to the surface, **characterized in that** the driver comprises a hammer with a head (6A) biased by a spring (6B) towards a pin (11), said head (6A) being pivotabic away from the pin (11) by an electrical solenoid (6C) of the cable clip gun.

2. A cable clip gun according to claim 1, wherein the driver (6) is operated by a trigger (7), whereby the trigger (7) controls an electrical source of power to the electrical solenoid (6C).

3. A cable clip gun according to claim 1 or 2, wherein the clips (10) are in the form of an array of clips joined together by frangible bridging means (12).

4. A cable clip gun according to claim 3, wherein the driver means severs a clip (10) being secured to a cable from the array of clip (10).

5. A cable clip gun according to any preceding claim, wherein the driver means is adjustable to drive a clip pin (11) at variable forces.

6. A cable clip gun according to any preceding claim, wherein the driver means is electrically operated.

7. A cable clip gun according to any preceding claim, wherein the gun (1) further comprises a metering means to secure a clip (10) over the wire at predetermined intervals.

8. A cable clip gun according to any preceding claim, wherein the gun (1) is adapted to accommodate different sizes of cable and clips (10).

## Patentansprüche

1. Kabelschellenpistole (1) zur Befestigung von Schellen (10) mit einem Stift (11) auf einem Kabel (X) an einer Oberfläche (Y), umfassend:
a) einen Pistolenkörper (2),
b) eine Speichereinrichtung zum Speichern mehrerer Schellen (10),
c) eine Kabelführung zum Hindurchführen des Kabels zu einer Treiberstation (5),
d) eine Ausgabeeinrichtung zum Ausgeben einer Schelle (10) aus der Speichereinrichtung auf das Kabel an der Treiberstation (5),
e) eine längliche Rille (4), wobei die längliche Rille (4) gestaltet ist, um die Speichereinrichtung zum Speichern von mehreren Schellen (10) zu sein, eine Einrichtung zum Führen des Kabels beinhaltet und als die Ausgabeeinrichtung zum Ausgeben einer Schelle (10) aus der Speichereinrichtung und auf das Kabel an der Treiberstation (5) wirkt, und
f) einen Treiber (6) zum Treiben des Schellenstifts (11) in die Oberfläche, um das Kabel an der Oberfläche zu befestigen,
**dadurch gekennzeichnet, dass** der Treiber einen Hammer mit einem Kopf (5A) umfasst, der von einer Feder (6B) zu einem Stift (11) hin vorgespannt wird, wobei der genannte Kopf (6A) durch einen Elektromagneten (6C) der Kabelschellenpistole von dem Stift (11) weg schwenkbar ist.

2. Kabelschellenpistole nach Anspruch 1, wobei der Treiber (6) von einem Auslöser (7) betätigt wird, so dass der Auslöser (7) eine Stromversorgung des Elektromagneten (6C) steuert.

3. Kabelschellenpistole nach Anspruch 1 oder 2, wobei die Schellen (10) die Form einer Anordnung von Schellen haben, die durch brechbare Überbrückungen (12) aneinandergefügt sind.

4. Kabelschellenpistole nach Anspruch 3, wobei die Treibereinrichtung eine Schelle (10), die an einem Kabel befestigt wird, von der Anordnung von Schellen (10) abtrennt.

5. Kabelschellenpistole nach einem der vorhergehenden Ansprüche, wobei die Treibereinrichtung zum Treiben eines Schellenstifts (11) mit unterschiedlichen Kräften einstellbar ist.

6. Kabelschellenpistole nach einem der vorhergehenden Ansprüche, wobei die Treibereinrichtung elektrisch betrieben wird.

7. Kabelschellenpistole nach einem der vorhergehenden Ansprüche, wobei die Pistole (1) ferner eine Messeinrichtung zum Befestigen einer Schelle (10) in vorbestimmten Abständen auf dem Draht aufweist.

8. Kabelschellenpistole nach einem der vorhergehenden Ansprüche, wobei die Pistole (1) ausgeführt ist, um verschiedenen Größen von Kabel und Schellen (10) gerecht zu werden.

## Revendications

1. Pistolet pour serre-câbles (1) pour fixer des agrafes (10), pourvues d'une broche (11), au-dessus d'un câble (X) dans une surface (Y), comprenant :
a) un corps (2) de pistolet,
b) des moyens de stockage pour stocker une pluralité d'agrafes (10),
c) un guide-câble pour guider le câble à travers un poste d'enfoncement (5),
d) des moyens de fourniture pour délivrer une agrafe (10) à partir des moyens de stockage au-dessus du câble au niveau du poste d'enfoncement (5),
e) un passage allongé (4), ce passage allongé (4) étant configuré de façon à constituer les moyens de stockage pour stocker une pluralité d'agrafes (10), lequel incorpore des moyens pour guider le câble et sert de moyen de fourniture pour délivrer une agrafe (10) à partir des moyens de stockage et au-dessus du câble au niveau du poste d'enfoncement (5), et
f) un dispositif d'enfoncement (6) pour enfoncer la broche (11) d'agrafe dans la surface afin de fixer le câble sur la surface,
**caractérisé en ce que** le dispositif d'enfoncement comprend un marteau muni d'une tête (6A) sollicité par un ressort (6B) vers une broche (11), ladite tête (6A) étant apte à pivoter pour s'éloigner de la broche (11) grâce à un solénoïde électrique (6C) du pistolet pour serre-câbles.

2. Pistolet pour serre-câbles selon la revendication 1, le dispositif d'enfoncement (6) étant actionné par une gâchette (7), ce qui permet ainsi à la gâchette (7) de commander une source électrique d'énergie se rendant au solénoïde électrique (6C).

3. Pistolet pour serre-câbles selon la revendication 1 ou 2, les agrafes (10) se présentant sous la forme d'un groupe d'agrafes jointes les unes aux autres par des moyens de pontage frangibles (12).

4. Pistolet pour serre-câbles selon la revendication 3, les moyens d'enfoncement détachant une agrafe (10), en train d'être fixée sur un câble, à partir du groupe d'agrafes (10).

5. Pistolet pour serre-câbles selon l'une quelconque des revendications précédentes, les moyens d'enfoncement étant réglables afin d'enfoncer une broche (11) d'agrafe suivant des forces variables.

6. Pistolet pour serre-câbles selon l'une quelconque des revendications précédentes, les moyens d'enfoncement étant actionnés électriquement.

7. Pistolet pour serre-câbles selon l'une quelconque des revendications précédentes, le pistolet (1) comprenant en outre un moyen de métrage pour fixer une agrafe (10) au-dessus du fil métallique suivant des intervalles prédéterminés.

8. Pistolet pour serre-câbles selon l'une quelconque des revendications précédentes, le pistolet (1) étant conçu pour recevoir différentes tailles de câble et d'agrafes (10).
